# EUROPEAN PATENT APPLICATION

(11) **EP 1 246 205 A1**
(43) Date of publication of application: **02.10.2002**
(21) Application number: 01810304.4
(22) Date of filing: 26.03.2001
(51) Int. Cl.: H01B 1/12, H01B 1/20, H01B 1/24, H01B 1/22

(54) **Electrically conducting nanocomposite material**

(71) Applicant: ABB RESEARCH LTD., 8050 Zürich (CH)
(72) Inventor: Dirix, Yvo, 8057 Zürich (CH); Fuhrmann, Henning, 8047 Zürich (CH); Greuter, Felix, 5406 Baden-Rüthihof (CH); Paul, Willi, 5430 Wettingen (CH); Carlen, Martin, 5443 Niederrohrdorf (CH)
(74) Representative: ABB Patent Attorneys

(57) **Abstract**

An electrically conducting nanocomposite material with a matrix comprising an intrinsically conducting polymer (ICP) and a plurality of conducting metaloxide (MO) nanotubes forming a threedimensional interconnected network embedded in the matrix is proposed. The nanotubes are furthermore coated with a metallic layer, and the interconnected network may be anisotropic via an at least partial alignment of the nanotubes.

## Description

### 1. Field of the invention

The invention relates to composite materials that consist of metaloxide (MO) nanotubes or carbon nanotubes (CNT) with an intrinsically conducting polymer (ICP).

### 2. Description of the Prior Art

Since the discovery of CNTs in 1991, a lot of research has been devoted to the production and characterisation (purification) of these materials. Interesting physical and mechanical (stiffness/strength) properties have been reported for tubes, in particular very high electrical conductivities for individual nanotubes (10³-10⁴ S/cm). However, to benefit from these properties on a macroscopic scale, research has been focussed on incorporation of these carbon nanotubes in a polymeric matrix. For example electrically insulating matrix materials such as epoxies or polyvinylalcohol have been used. The electrical conductivity at room temperature remained however low ( < 10⁻⁴ S/cm at a filling grade of 0.1 vol. %), presumably due to the hindered charge transfer between individual nanotubes. The hindered charge transfer was reduced significantly by using intrinsically conducting (π-conjugated) polymers such as poly(p-phenylene vinylene) (PPV), resulting in an electrical conductivity at room temperature of 8.3 S/cm. However, the morphology of these materials is not homogeneous and consist of a bi-layer structure where the intrinsically conducting polymer is cast on top of a carbon nanotube layer which reduces the electrical conductivity of the composite.

### 3. Disadvantages of the prior art

First, the composites produced so far contained relatively expensive carbon nanotubes, this in contrast to metaloxide nanotubes, comprising for example vanadiumoxide, that are cheaper and available on a larger (Kgs) scale [WO9826871]. Secondly, the composites were fabricated from non-coated nanotubes whereas tubes coated with a metallic layer (silver, gold, nickel, copper) could further reduce the interface limitation hindering electrical charge transport between the tubes.

Additionally, the current carbon nanotube composites based on intrinsically conducting polymers consist of a bilayer structure whereas a co-continuous morphology would further improve the electrical conductivity of the material. Finally, the composites are isotropic, thereby not taking fully benefit from the highly anisotropic properties of the nanotubes.

### 4. Summary of the Invention

In the present invention , electrically conducting nanocomposites are proposed with an enhanced electrical performance which are based on nanotubes and intrinsically conducting polymers. These composites can be either isotropic or anisotropic. In the latter case the microscopic anisotropy (electrical/thermal/mechanical) of the tubes is transferred to a macroscopic scale. The composite structure is co-continuous and the nanofiller is either a carbon nanotube or a metaloxide nanotube such as vanadiumoxide, tinoxide, titaniumdioxide. Examples for the intrinsically conducting polymer are PPV, Polyaniline, polypyrolle, polythiophene or poly-alkyl thiophenes, poly(p-phenylene ethynylene). Furthermore, the nanotubes can be used in its pure form or they can be coated either with an electrically conducting metallic layer or with a dopant layer. This layer can melt, diffuse or react during composite fabrication and thus form conducting or semi-conducting bridges between individual nanotubes in he composite material. This further reduces the electrical resistance at tube-tube contacts, in addition to the beneficial influence from the ICP matrix. The coating on the nanotubes can also be a (bifunctional) coupling agent which improves wetting and bonding of the nanotubes to the ICP matrix, thereby improving the processing, filling content, mechanical and electrical properties of the composite material. Both the the conducting ICP matrix and the coating are thought to serve as a bypass at local, low conductivity spots in the composite.

The ICP matrix comprises for instance a thermosetting polymer such as epoxy. The nanotubes are added in a sufficient amount to the thermosetting polymer and well distributed by appropriate means. After that, the thermosetting polymer is cured under heat and/or pressure, thereby forming a solid composit material comprising a threedimensional network of interconnected nanotubes embedded in the cured polymer matrix. Alternatively, the nanotubes can be distributed in the liquid or molten phase of a thermoplastic polymer prior to solidification. The nanotubes can be at least partially oriented in a preferential direction by applying suitable electromagnetic fields during the curing or solidification process or by solid state drawing of the solidified composite material, i.e. by mechanical deformation of the composite material at temperatures close to but below the melting temperature of its thermoplastic matrix. The resulting network of the interconnected nanotubes as well as the resulting composite show strong anisotropic properties.

## Claims

1. Electrically conducting nanocomposite material with a matrix comprising an intrinsically conducting polymer and a plurality of conducting nanotubes embedded in the matrix, **characterized in that** the nanotubes form a threedimensional interconnected network.

2. Nanocomposite material according to claim 1, **characterized in that** the nanotubes are at least partially coated with a metallic layer.

3. Nanocomposite material according to claim 1, **characterized in that** the network is anisotropic.

4. Process for producing an electrically conductive nanocomposite material with a matrix comprising an intrinsically conducting polymer and a plurality of conducting nanotubes embedded in the matrix, **characterized in that** the nanotubes are dispersed in a molten thermoplastic polymer or an uncured thermosetting polymer.

5. Process according to Claim 4, **characterized in that** the nanotubes are oriented by the application of external fields during curing or solidification of the matrix or by solid-state drawing.
